# EUROPEAN PATENT SPECIFICATION

(11) **EP 2 440 372 B1**
(45) Date of publication and mention of the grant of the patent: **07.08.2019**
(21) Application number: 10786464.7
(22) Date of filing: 11.06.2010
(51) Int. Cl.: B25B 23/147, B25B 21/00, B25B 23/00

(54) **PORTABLE POWER WRENCH WITH A GEAR CASING AND A PARAMETER SENSING DEVICE**
TRAGBARER KRAFTSCHRAUBER MIT GETRIEBEGEHÄUSE UND PARAMETERERFASSUNGSVORRICHTUNG
CLÉ À CHOC PORTATIVE POURVUE D'UN BOÎTIER D'ENGRENAGE ET D'UN DISPOSITIF DE DÉTECTION DE PARAMÈTRE

(30) Priority: 11.06.2009 SE 0900795
(43) Date of publication of application: 18.04.2012
(73) Proprietor: Atlas Copco Industrial Technique AB, 105 23 Stockholm (SE)
(72) Inventor: ELSMARK, Karl Johan Lars, S-132 39 Saltsjö-Boo (SE)
(74) Representative: Tholin, Thomas
(86) International application number: PCT/SE2010/050656
(87) International publication number: WO 2010/144048

(56) References cited:
- EP-A1- 2 248 632
- WO-A1-03/006211
- WO-A1-03/013797
- WO-A1-2008/057023
- DE-A1- 4 210 201
- DE-A1- 10 237 728
- DE-A1- 19 637 934
- DE-U1-202004 017 472
- GB-A- 2 293 012
- US-A- 5 874 681

## Description

The invention relates to a portable power wrench comprising a housing with a rotation motor, a gear casing including a gearing and an output shaft, wherein the gear casing is rotatively and/or releasably connected to the housing via a swivel or multi-position connection.

In particular the invention concerns a power wrench of the above type wherein at least one operation parameter sensing device is located in the gear casing and connected to an operation control unit, and a means for transferring signals between the operation parameter sensing means in the gear casing and the housing.

In power wrenches provided with operation parameter sensing devices like torque transducers it is an advantage from the signal accuracy point of view to locate the torque transducer as close as possible to the screw joint being tightened, e.g. on the output shaft of the power wrench or at least on a rotating part in the gear casing. This is a previously well known want. It is also previously known to have sensing means activating power as well as generated signals transferred between the sensing means and the wrench housing via different types of signal transferring means.

A particular signal transmission problem occurs in power wrenches having a forward gear casing that is rotatively and/or releasably supported on the power wrench housing via a swivel or multi-position connection. A power wrench of this type is previously described in for instance US Patent No. 4,485,698. When such a power wrench is provided with one or more operation parameter sensing devices located in the gear casing the signals generated thereby have to be transferred from the gear casing to an electronic operation control unit which is provided either in the tool housing or in a stationary unit separate from the power wrench. In both cases there is a requirement to obtain a simple yet reliable transfer of signals from the sensing device or devices in the gear casing to a wiring in the housing for further transport to a control unit, in the housing or at a remote location.

It is an object of the invention to provide a portable power wrench comprising a housing, a gear casing rotatively and/or releasably supported on the housing via a swivel or multi-position connection, wherein the gear casing comprises at least one power transferring rotating part, and at least one operation parameter sensing device, and movement admitting signal transferring devices provided to transfer operation parameter related signals generated by the sensing device or devices to the gear casing and the wrench housing.

It is another object of the invention to provide a portable power wrench comprising a housing, a gear casing rotatively and/or releasably supported on the housing via swivel connection, wherein the gear casing comprises at least one power transferring rotating part, and at least one operation parameter sensing device associated with the power transferring rotating part, and a contact free movement admitting signal transferring device arranged between the rotating part and the gear casing.

WO 03/013797 relates to a method for controlling an intermittent screw process. The method is first carried out in a torque mode in which the torque is continuously measured. When a pre-torque is achieved, the method is carried out in an angle of rotation mode wherein the angle of rotation is measured. The screw process is ended when a target angle is reached.

EP 2 248 631 A1 relates to a data transmitting and receiving system including a data transmitting unit provided on the rotary shaft of a tightening machine to detect the torque and the rotation angle, including a torque sensor, a rotary angle sensor transmitting means and a data receiving unit and display means that displays the signals regarding the torque and rotation angle received by the receiving means.

WO 2008/05703 relates to a power tool comprising a power unit with a rotation motor and a reduction gearing wherein the reduction gearing comprises a set of interchangeable gearing units attachable one at a time to the power unit and having all different operational characteristics like different total gear ratio and torque capacity.

Still another object of the invention is to provide a portable power wrench comprising a housing, a gear casing rotatively and/or releasably supported on the housing and comprising a power transferring rotating part, at least one operation parameter sensing device associated with the power transferring rotating part, and signal treating electronic components connected to the sensing device, wherein the power transferring rotating part is formed with a coaxial cavity in which the electronic components are located.

Further objects and advantages of the invention will appear from the following specification and claims.

Preferred embodiments of the invention are described below with reference to the accompanying drawings.

In the drawings
Fig. 1 shows a side view of a power wrench which does not form part of the invention.
Fig. 2 shows a longitudinal section through the gear casing of the power wrench in Fig.1.
Fig. 3 shows a longitudinal section through the gear casing of a power wrench according to an embodiment of the invention.

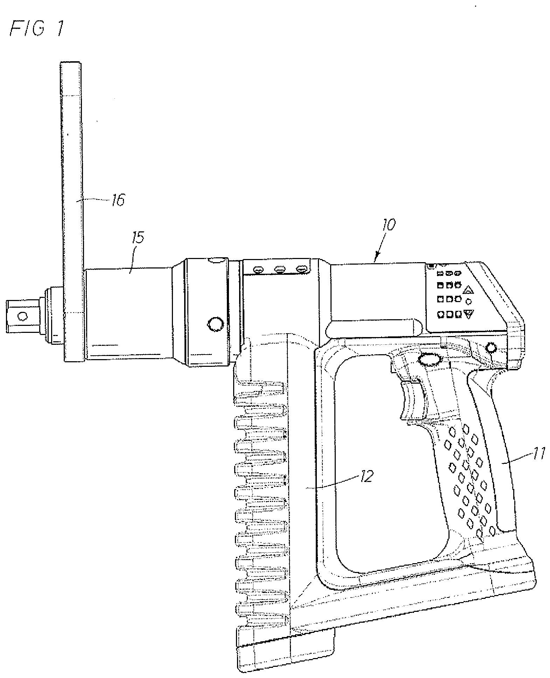

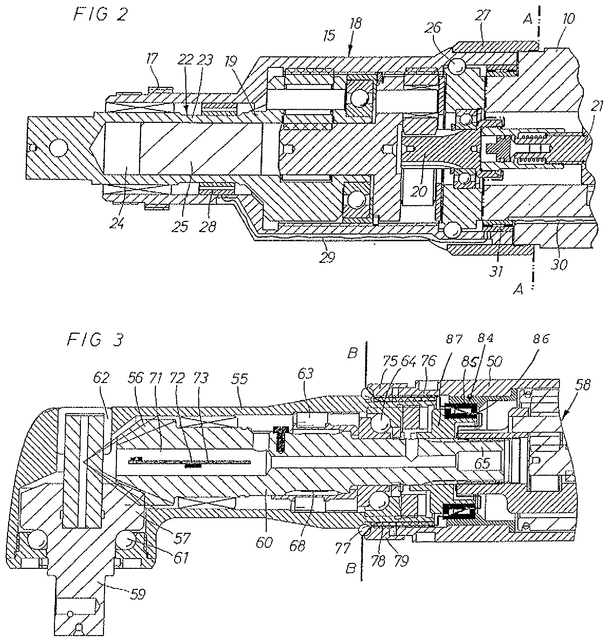

The power wench illustrated in Figs 1 and 2 comprises a housing 10 with a rear handle 11 and a motor section 12 extending substantially in parallel with the handle 11 and enclosing a rotation motor. A gear casing 15 is rotatively and releasably connected to the housing 10 and carries a torque reaction bar 16 at its forward end. The torque reaction bar 16 is supported and rotationally locked relative to the gear casing 15 via a splines portion 17. The interface between the housing 10 and the gear casing 15 is illustrated by a line A-A.

The gear casing 15 is axially locked relative to the housing 10 in a conventional way by balls 26 engaging grooves in the two parts, and a maneuver sleeve 27 is movably supported on the housing 10 and arranged to retain the balls 26 in their locking positions and to release the gear casing 15 by letting the balls 26 disengage at least one of the grooves.

The gear casing 15 comprises a two stage planetary type reduction gearing 18 and power transferring drive spindle 19. The latter forms a square ended output shaft for connection to a nut socket. The first stage of the reduction gearing 18 comprises a sun gear 20 which is coupled to the motor via a connection shaft 21 and a non-illustrated angle drive. The gear casing 15 is one of a number of interchangeable gear casings, wherein the gear ratios of the gear casings are different. So, by changing gear casing it is possible to obtain a different gear ratio. However, the reduction gearing 18 per se is of a conventional type, and since it does not form any part of the invention it is not described in further detail.

The drive spindle 19 is provided with a torque sensing device 22 comprising an elastically deformable weak portion 23 of the drive spindle 19 and a strain gauge arrangement (not illustrated in further detail) fitted thereto. The drive spindle 19 is provided with a coaxial cavity 24, and the weak portion 23 is formed by the circumferential wall of the cavity 24. The cavity 24 could also be arranged non-coaxilly as long as the spindle with its components is balanced and has symmetrical properties to allow reliable signals from the strain gauges. Inside the cavity 24 there are located a number of electronic components forming a signal treating unit 25 connected to the strain gauge arrangement.

The signals produced by the torque sensing device 22 are transferred to an operation control unit for controlling the power wrench operation in relation to feed back signals received from the torque sensing device 22. The control unit is not illustrated per se but is located either in the housing 10 or at a remote location separate from the wrench. In any case, the signals produced by the torque sensing device 22 have to be transferred to the housing 10. The very first step to do this is to transfer the signals from the drive spindle 19 to the gear casing 15. This is accomplished by a first contact free signal transferring device 28 which is connected to electric leads 29 in the gear casing 15. This signal transferring device 28 is illustrated schematically only and may be of any known contact free type, for instance an induction device comprising magnets and coils, a device including a magnetostrictive material in the output spindle, a telemetric signal transferring device etc.

For transferring the torque sensor signals from the gear casing 15 to the housing 10 and to the control unit there is provided a second signal transferring device 31, and an electric wiring 30 is provided in the housing 10 to connect the device 31 with the control unit, directly if located in the housing or via an external cable if located remotely from the wrench. The second signal transferring device 31 may be of a contact free type or a brush type. Since the rotation between the gear casing 15 relative to the housing 10 is relatively limited there will be no mechanical wear and that a brush type of signal transferring device will be safe and reliable enough.

In high power wrenches where a torque reaction bar is used to transfer the reaction forces to a suitable structure and to protect the operator from being exposed to these forces it is important that the gear casing on which the torque reaction bar is attached is rotatable or swivelled relative to the wrench housing and handle. This means that when an operation parameter sensing device, for instance a torque transducer, is provided on or close to the output shaft of the wrench there has to be a rotation admitting signal transferring device not only between the drive spindle/output shaft and the gear casing but also between the gear casing and the housing. In order to avoid mechanical wear and bad contact the signal transferring device between the drive spindle/output shaft and the gear casing has to be contact free. However, the signal transferring device provided between the gear casing and the housing is not exposed to such an extensive rotational movement, which means that the signal transferring device provided between these two parts may be of a simple brush type, as mentioned above.

The arrangement of a first and a second rotatable signal transferring devices makes it possible to locate an operation parameter sensing device on or close to the output shaft wherein the gear casing is rotatable and releasable relative to the wrench housing. It also means that the gear casing with an operation parameter sensing device which has been calibrated at its installation in relation to the actual application and a torque reaction bar fitted may be easily removable as a unit and exchanged for another gear casing unit with another gear ratio and/or torque reaction bar fitted.

In Fig. 3 there is illustrated the front part of an angle type power wrench which comprises a housing 50 in which there is located a rotation motor and a planet type reduction gearing 58. The front part of the power wrench comprises a gear casing 55 with an angle gear including a pinion 56 and a bevel gear 57. The bevel gear 57 is formed integrally with a square ended output shaft 59 which is supported in bearings 61, 62. The pinion 56 is formed integrally with a drive spindle 60 which is supported by bearings 63, 64. At its rear end the drive spindle 60 is formed with a splined portion 65 for releasable drive connection with a planet wheel carrier 66 of the reduction gearing 58.

A torque sensor comprising strain gauges 68 is attached to the drive spindle 60 so as to be activated by torsional elastic deformation of the drive spindle 60 during torque transfer. The drive spindle 60 comprises an internal coaxial cavity 71, wherein a printed circuit board 73 is located. The cavity 71 could also be arranged non-coaxilly as long as the spindle with its components is balanced and has symmetrical properties to allow reliable signals from the strain gauges. The circuit board 73 carries electronic components 72 connected to the strain gauges 68 and arranged to treat the signals delivered by those. The circuit board 73 also comprises a memory unit for storing operation parameter data and/or the number of operation cycles performed by the gear casing.

The gear casing 55 is formed with a rear neck portion 75 to be received in a socket portion 76 of the housing 50. The gear casing 55 is axially locked to the housing 50 by balls 77 and rotationally locked thereto by a splines connection 78. The balls 77 are retained in their locking positions by a maneuver sleeve 79 movably supported on the housing 50. The interface between the gear casing 55 and the housing 50 is illustrated by a line B-B.

The electric signals generated by the strain guages 68 and treated by the electronic components 72 on the circuit board 73 are transferred to the housing 50 via a transferring device 84. The latter comprises a stationary part 85 supported on the housing 50 and a rotating part 86 supported on a carrier element 87 secured to the rear portion 65 of the drive spindle 60. In order to avoid mechanical wear and disturbances related thereto this signal transferring device 84 is of a contact free type, for instance inductive or telemetric.

In the housing 50 there is provided a non-illustrated wiring for connecting the second signal transferring device 84 with an operation control unit which is not illustrated per se but is located either in the housing 50 or at a remote location separate from the power wrench.

By providing a separate and releasable and/or exchangeable gear casing to the housing of a power wrench with at least one operation sensing means associated with the drive spindle and signal transferring devices between the drive spindle and the gear casing on one hand and between the gear casing and the power wrench housing on the other hand, as specified by the invention, provides the advantage of having a separate and exchangeable gear casing which is complete with calibrated operation sensing means which is automatically and simultaneously connected to an operation control unit as the gear casing is attached to the power wrench housing. This avoids sources of error and bad contacts and makes it possible to locate the operation sensing means after the reduction gearing, thereby avoiding to a large extent signal distortions.

## Claims

1. Portable power wrench comprising a housing (10;50), a rotation motor, a gear casing (15;55) supported on the housing (10;50) and comprising a gearing (18;56,57) and a power transferring drive spindle (19;60), and at least one operation parameter sensing device (22,23;68) associated with the drive spindle (19;60), wherein
• the drive spindle (19;60) comprises a coaxial internal cavity (24;71),
• signal treating electronic components (25;72) are located in said cavity (24;71) and connected to the at least one operation parameter sensing device (22,23;68), and
a signal transferring device (31;84) communicating with said electronic components (25;72) and arranged to transfer to the housing (10;50) signals generated by the at least one operation parameter sensing device (22,23;68) and treated by said electronic components (25;72),
• said gear casing is rotatably and/or releasably coupled to said housing (10; 50) and **characterized in that** the drive spindle (60) has a rear end portion (65) extending into the housing (50), and said signal transferring device (84) comprising a rotating part (86) connected to said rear end portion (65) of the drive spindle (60) and a stationary part (85) mounted in the housing (50).

2. Portable power wrench according to claim 1, wherein a memory unit for storing operation parameter data is located in said cavity (24;71), and said electronic components (25;72) and said memory unit are disposed on a common circuit board (73).

3. Portable power wrench according to claim 2, wherein the gear casing (15;55) forms a separate unit exchangeably attached to the housing (10;50), and the memory unit with operation data relevant to a particular gear casing is a part of that gear casing (15;55).

4. Portable power wrench according to anyone of claims 1-3, wherein the gear casing (15;55) comprises a gearing (18;56,57) of a certain gear ratio, and the gear casing (15;55) is one of a number of interchangeable gear casings having gearings (18;56,57) of different gear ratio.

## Patentansprüche

1. Tragbarer Kraftschrauber, umfassend ein Gehäuse (10; 50), einen Rotationsmotor, einen Getriebekasten (15; 55), der an dem Gehäuse (10; 50) getragen wird und ein Getriebe (18; 56, 57) und eine kraftübertragende Antriebsspindel (19; 60) umfasst, und mindestens eine Vorrichtung (22, 23; 68) zum Erfassen von Betriebsparametern, die mit der Antriebsspindel (19; 60) verknüpft ist, wobei
- die Antriebsspindel (19; 60) einen koaxialen internen Hohlraum (24; 71) umfasst,
- sich signalverarbeitende elektronische Komponenten (25; 72) in dem Hohlraum (24; 71) befinden und mit der mindestens einen Vorrichtung (22, 23; 68) zum Erfassen von Betriebsparametern verbunden ist, und
eine signalübertragende Vorrichtung (31; 84), die mit den elektronischen Komponenten (25; 72) kommuniziert und angeordnet ist, um an das Gehäuse (10; 50) Signale zu übertragen, die durch die mindestens eine Vorrichtung (22, 23; 68) zum Erfassen von Betriebsparametern erzeugt werden und durch die elektronischen Komponenten (25; 72) verarbeitet werden,
- der Getriebekasten drehbar und/oder abnehmbar mit dem Gehäuse (10; 50) gekoppelt ist, und **dadurch gekennzeichnet ist, dass** die Antriebsspindel (60) einen hinteren Endabschnitt (65) aufweist, der sich in das Gehäuse (50) erstreckt, und die signalübertragende Vorrichtung (84) ein drehendes Teil (86), das mit dem hinteren Endabschnitt (65) der Antriebsspindel (60) verbunden ist, und ein feststehendes Teil (85), das an dem Gehäuse (50) montiert ist, umfasst.

2. Tragbarer Kraftschrauber nach Anspruch 1, wobei sich eine Speichereinheit zum Speichern von Betriebsparameterdaten in dem Hohlraum (24; 71) befindet und die elektronischen Komponenten (25; 72) und die Speichereinheit auf einer gemeinsamen Leiterplatte (73) angeordnet sind.

3. Tragbarer Kraftschrauber nach Anspruch 2, wobei der Getriebekasten (15; 55) eine getrennte Einheit bildet, die austauschbar an dem Gehäuse (10; 50) angebracht ist, und die Speichereinheit mit Betriebsdaten bezüglich eines bestimmten Getriebekastens Teil dieses Getriebekastens (15; 55) ist.

4. Tragbarer Kraftschrauber nach einem der Ansprüche 1 bis 3, wobei der Getriebekasten (15; 55) ein Getriebe (18; 56, 57) mit einem gewissen Übersetzungsverhältnis umfasst, und der Getriebekasten (15; 55) einer von einer gewissen Anzahl von austauschbaren Getriebekästen ist, die Getriebe (18; 56, 57) mit unterschiedlichem Übersetzungsverhältnis aufweisen.

## Revendications

1. Clé à choc portative comprenant un boîtier (10 ; 50), un moteur rotatif, un carter d'engrenage (15 ; 55) supporté sur le boîtier (10 ; 50) et comprenant un engrenage (18 ; 56, 57) et un arbre d'entraînement de transfert de puissance (19 ; 60), et au moins un dispositif de détection de paramètre de fonctionnement (22, 23 ; 68) associé à l'arbre d'entraînement (19 ; 60), dans laquelle
• l'arbre d'entraînement (19 ; 60) comprend une cavité interne coaxiale (24 ; 71),
• des composants électroniques de traitement de signal (25 ; 72) sont situés dans ladite cavité (24 ; 71) et reliés à l'au moins un dispositif de détection de paramètre de fonctionnement (22, 23 ; 68), et
un dispositif de transfert de signal (31 ; 84) communiquant avec lesdits composants électroniques (25 ; 72) et agencé pour transférer au boîtier (10 ; 50) des signaux générés par l'au moins un dispositif de détection de paramètre de fonctionnement (22, 23 ; 68) et traités par lesdits composants électroniques (25 ; 72),
• ledit carter d'engrenage est couplé de manière rotative et/ou libérable audit boîtier (10 ; 50), et **caractérisée par le fait que** l'arbre d'entraînement (60) a une partie d'extrémité arrière (65) s'étendant dans le boîtier (50), et ledit dispositif de transfert de signal (84) comprenant une partie rotative (86) reliée à ladite partie d'extrémité arrière (65) de l'arbre d'entraînement (60) et une partie immobile (85) montée dans le boîtier (50) .

2. Clé à choc portative selon la revendication 1, dans laquelle une unité de mémoire pour stocker des données de paramètre de fonctionnement est située dans ladite cavité (24 ; 71), et lesdits composants électroniques (25 ; 72) et ladite unité de mémoire sont disposés sur une carte de circuits commune (73).

3. Clé à choc portative selon la revendication 2, dans laquelle le carter d'engrenage (15 ; 55) forme une unité distincte fixée de manière échangeable au boîtier (10 ; 50), et l'unité de mémoire ayant des données de fonctionnement relatives à un carter d'engrenage particulier fait partie de ce carter d'engrenage (15 ; 55).

4. Clé à choc portative selon l'une quelconque des revendications 1 à 3, dans laquelle le carter d'engrenage (15 ; 55) comprend un engrenage (18 ; 56, 57) d'un certain rapport d'engrenage, et le carter d'engrenage (15 ; 55) est l'un d'un nombre de carters d'engrenage interchangeables ayant des engrenages (18 ; 56, 57) de rapports d'engrenage différents.
